# EUROPEAN PATENT APPLICATION

(11) **EP 3 693 439 A1**
(43) Date of publication of application: **12.08.2020**
(21) Application number: 19156015.0
(22) Date of filing: 07.02.2019
(51) Int. Cl.: C09K 11/66, C09K 11/59, C09K 11/02

(54) **METHOD FOR MANUFACTURING QUANTUM DOTS**

(71) Applicant: Universiteit van Amsterdam, 1098 XH Amsterdam (NL); Universiteit Twente, 7522 NB Enschede (NL)
(72) Inventor: NIE, Hui, 7522 NB Enschede (NL); NEWELL, Katerina, 1098 XH Amsterdam (NL); PAULUSSE, Jos Marie Johannes, 7522 NB Enschede (NL)
(74) Representative: De Vries & Metman

(57) **Abstract**

The invention pertains to a process for manufacturing silicon or germanium quantum dots which process comprises the steps of
- reacting a Zintl salt or intermetallic compound of post-transition metals or metalloids of silicon or germanium with a halogen-containing oxidizing agent to form halide-terminated silicon or germanium quantum dots,
- subjecting the halide-terminated silicon or germanium quantum dots to a reduction step by reaction with a reducing agent, to form hydride-terminated silicon or germanium quantum dots, and
- subjecting the hydride-terminated silicon or germanium quantum dots to, respectively, a hydrosilylation reaction or hydrogermylation reaction with a passivating agent, to form passivated silicon or germanium quantum dots.

The process according to the invention makes it possible to obtain quantum dots with a high quantum yield. The invention also pertains to silicon or germanium quantum dots with a quantum yield of at least 20% at an excitation wavelength of 350 nm, and/or at least 15% at 370 nm

## Description

The present invention pertains to a method for manufacturing nanoparticles. The invention pertains in particular to a method for manufacturing silicon and germanium quantum dots.

Quantum dots (QD) are semiconductor based nanoparticles, which due to their unique sizes possess unique features as compared to bulk materials, in particular with respect to optoelectronic properties. Changes in physical or chemical properties of the quantum dots, in particular their size, shape, and/or composition and surface passivation, enable tuning of light absorption and emission over a broad spectral range. Quantum dots have potential in a number of applications including LEDs, displays, (bio)medical imaging, transistors, solar cells, as well as diode lasers, second-harmonic generation and quantum computing. Silicon quantum dots are of particular interest in view of the wide availability of silicon, its non-toxic character, and their optoelectronic properties. Germanium quantum dots are likewise of interest as well due to their attractive optoelectronic properties, and the increased possibilities of chemical modification due to their different electronic structure.

While there is major interest in quantum dots and their properties, it has been found difficult to manufacture quantum dots with good properties, in particular with a high quantum yield. The present invention pertains to a process for preparing quantum dots with high quantum yield.

The invention pertains to a process for manufacturing silicon or germanium quantum dots which process comprises the steps of
- reacting a Zintl salt or intermetallic compound of post-transition metals or metalloids of silicon or germanium with a halogen-containing oxidizing agent to form halide-terminated silicon or germanium quantum dots,
- subjecting the halide-terminated silicon or germanium quantum dots to a reduction step by reaction with a reducing agent, to form hydride-terminated silicon or germanium quantum dots, and
- subjecting the hydride-terminated silicon or germanium quantum dots to, respectively, a hydrosilylation reaction or hydrogermylation reaction with a passivating agent, to form passivated silicon or germanium quantum dots.

It has been found that the specific combination of process steps in the overall process according to the invention makes it possible to obtain quantum dots with a high quantum yield. Further, the process according to the invention can be carried out in an efficient and reproducible manner. Further advantages of the process according to the invention and specific embodiments thereof will become apparent from the further specification.

The process according to the invention results in the production of silicon or germanium quantum dots with a high quantum yield. In particular it has been found that the process according to the invention makes it possible to obtain quantum dots with a quantum yield of at least 20% at an excitation wavelength of 350 nm, and/or at least 15% at an excitation wavelength of 370 nm. This is a substantial improvement as compared to an otherwise comparable process wherein the halide-terminated silicon or germanium quantum dots are subjected directly to a reaction with metal alkyl reagent. In this case, a quantum yield of 15.9% at 350 nm and 11.1% at 370 nm is obtained.

It is possible with the process according to the invention to obtain quantum dots with a quantum yield of at least 25%, in particular at least 30% at an excitation wavelength of 350 nm, and/or at least 15%, in particular at least 20% at an excitation wavelength of 370 nm. Quantum yield is determined relative to 9,10-diphenylanthracene in ethanol.

The present invention thus also pertains to silicon or germanium quantum dots with a quantum yield of at least 20% at an excitation wavelength of 350 nm, and/or at least 15% at an excitation wavelength of 370 nm, and in particular a quantum yield of at least 25%, in particular at least 30% at an excitation wavelength of 350 nm, and/or at least 15%, in particular at least 20% at an excitation wavelength of 370 nm.

In one embodiment, the quantum dots that can be obtained by the method according to the invention have a number average particle size of 0.5-5 nm as determined by transmission electron microscopy. In one embodiment, the quantum dots that can be obtained by the method according to the invention have a number average particle size of 2.2 +/- 0.5 nm as determined by transmission electron microscopy.

In one embodiment the quantum dots show an emission spectrum with a maximum peak in the range of 390-440 nm, in particular in the range of 400-430 nm, more in particular in the range of 410-430 nm, the peak having a width at half maximum of at most 200 nm, in particular at most 150 nm, e.g., at about 100 nm.

The process according to the invention will be discussed in more detail below.

In the first step of the process according to the invention a Zintl salt or intermetallic compound of post-transition metals or metalloids of silicon or germanium is reacted with a halogen-containing oxidizing agent to form halide-terminated silicon or germanium quantum dots.

The method according to the invention starts from a Zintl salt or intermetallic compound of post-transition metals or metalloids of silicon or germanium. Zintl salts are intermetallic compounds of group 1 or 2 metals.

Examples of suitable silicon compounds are Mg2Si, NaSi, KSi, CoSi2, B4Si, W5Si3, VSi2, CeSi2, Yb3Si5, IrSi, Al4Si3, ZrSi2, Cu5Si, YSi2, Ni2Si, YbSi2, NbSi2, EuSi2, GeSi, SrSi2, ErSi2, PtSi, PdSi, NdSi2, HfSi2, BaSi2, MnSi2, CrSi2, WSi2, MoSi2, Cr3Si, Mo5Si3.

For reasons of activity, availability and the absence of toxic heavy metals, the following silicon compounds are considered preferred: Mg2Si, NaSi, KSi, and Ca2Si.

Examples of suitable germanium compounds are Mg2Ge, NaGe, K4Ge, CoGe, B4Ge, GeV, HfGe2, CeGe2, Yb3Ge5, Al4Ge3, IrGe, ZrGe2, Cu5Ge, YGe2, Ni2Ge, YbGe2, NbGe2, EuGe2, GeSi, SrGe2, ErGe2, PtGe, PdGe, NdGe2, BaGe2, MnGe2, CrGe2, WGe2, MoGe2, Cr3Ge, Mo5Ge3.

For reasons of activity, availability and the absence of toxic heavy metals, the following germanium compounds are considered preferred: Mg2Ge, NaGe, K4Ge, and Ca2Ge.

Silicon quantum dots are more attractive than germanium quantum dots as silicon has wider availability and fewer toxicity issues. Therefore the use of silicon Zintl salts is considered preferred.

The silicon or germanium Zintl salt or intermetallic compound is reacted with a halogen-containing oxidizing agent to form halide-terminated silicon quantum dots.

Suitable halogen-containing oxidizing agents include Cl2, Br2, F2, and 12. The use of bromine as oxidizing agent is considered preferred, because it has been found to give high product yields and is practical to work with.

The Zintl salt or intermetallic compound and the oxidizing agent are brought together and allowed to react. The reaction between the Zintl salt or intermetallic compound and the oxidizing agent generally takes place in the presence of a solvent. Suitable solvents will be relatively unreactive under reaction conditions in that they do not react with the Zintl salt or intermetallic compound or the oxidizing agent to a substantial extent. Suitable solvents include organic solvents such as straight chain or branched alkanes with 4 to 18 carbon atoms, ethers, including mono-, di-, and polyethers with 4-18 carbon atoms, and fluorinated alkane compounds.

Straight chain or branched alkanes with 4 to 18 carbon atoms, in particular 6 to 12 carbon atoms have been found attractive in the method according to the invention, because they are relatively unreactive under reaction conditions and are easy to work with. Examples of preferred compounds are n-heptane, and n-octane.

Ethers, including mono-, di-, and polyethers with 4-18 carbon atoms have also been found suitable. The use of di- and polyethers with 4-10 carbon atoms, such as 1,2-dimethoxyethane and 1-methoxy-2-(2-methoxyethoxy)ethane) has been found to be particularly attractive. Mixtures of different solvents may also be used. It is noted that while the halogen-containing oxidizing compound generally has a good solubility in the solvent, the solubility of the Zintl salt or intermetallic compound may be relatively low. It is not necessary for the Zintl salt or intermetallic compound to actually dissolve in the solvent. This may be preferred, however, to increase the reaction rate.

The reaction mixture comprising Zintl salt or intermetallic compound and oxidizing agent is allowed to react. Suitable reaction temperatures include 0 to 200°C, in particular room temperature to 150°C. A temperature below 0°C is generally not attractive for industrial operation. A temperature above 200°C is generally not attractive because it may require relatively high pressures.

The reaction pressure is generally not critical, as long as the various reactants are maintained in the liquid phase. A suitable pressure will thus depend on the reaction temperature. A pressure of 1-10 bar will generally be suitable, with atmospheric pressure being preferred.

The reaction time will generally vary between 2 hours and 7 days, with lower reaction temperatures necessitating longer reaction times. Longer reaction times at lower temperatures may result in less side products and higher yields. Therefore, a reaction time of 24 hours to 7 days, in particular 24 hours to 5 days may be preferred. It may be preferred to combine a time in this range with a temperature in the range of range of 0-150°C.

The molar ratio between the oxidizing agent and the Zintl salt or intermetallic compound generally is in the range of 1:1 to 40:1. Outside these ranges there will either be insufficient oxidizing agent to obtain attractive conversion, or an unnecessary excess of oxidizing agent. It may be preferred for the molar ratio between the oxidizing agent and the Zintl salt or intermetallic compound to be in the range of 5:1 to 30:1, in particular 5:1 to 20:1.

The solvent generally makes up between 10 and 99 wt.% of the reaction mixture comprising Zintl salt or intermetallic compound, oxidizing agent and solvent. If the amount of solvent is below 10 wt.%, it is generally insufficient to allow proper mixing of the various reactants.

The reaction is carried out in an inert atmosphere. In particular, the presence of oxygen and water is to be avoided. Working in an inert atmosphere is within the scope of the person skilled in the art, and encompasses, e.g., the use of nitrogen blankets etc. This requires no further elucidation here.

Upon completion of the reaction, a dispersion of solid halide-terminated silicon or germanium quantum dots in a solvent will have been formed.

The dispersion of solid halide-terminated silicon or germanium quantum dots in a solvent can be processed directly in the reduction step. It is also possible to carry out one or more intermediate steps, e.g, purification steps..

In a next step, the halide-terminated silicon or germanium quantum dots are subjected to a reduction step by reaction with a reducing agent, to form hydride-terminated silicon or germanium quantum dots.

In general, the reduction step is carried out by contacting the quantum dots with a reducing agent in the presence of a liquid reaction medium, followed by neutralization of the reducing agent.

Examples of suitable reducing agents include hydrogen-donating agents, e.g., inorganic hydride compounds such as LiAlH4, NaBH4, NaBH3CN, NaH, LiH, and CaH2, organic hydride compounds such as borane, diborane, and di-isobutylaluminiumhydride, and hydrogen gas. Other suitable reducing agents include carboxylic acids, e.g. C1-C10 carboxylic acids such a citric acid or oxalic acid, organic thiol compounds such as dithiothreitol, etc.

The use of hydride compounds, in particular inorganic hydride compounds such as LiAlH4 and NaBH4, may be preferred.

The amount of reducing agent is not critical in the method according to the invention, as long as sufficient reducing agent is added to convert the halide-terminated quantum dots into hydride-terminated quantum dots. It is within the scope of the skilled person to select a suitable amount of reducing agent. The use of a molar excess of reducing agent may be preferred, because it may result in a reduction of impurities. If a molar excess of reducing agent is used, it will generally be at a molar ratio of 2:1 to 50:1, e.g., in the range of 5:1 to 20:1, calculated as moles reducing agent per mole silicon or germanium.

The reaction is generally carried out in a liquid medium. the main requirement on the liquid medium is that it is relatively unreactive under reaction conditions. Examples of suitable liquid media include, but are not limited to the solvents mentioned above for the reaction between the Zintl salt or intermetallic compound and the oxidizing agent. In addition, aromatic solvents may also be used. The use of ethers and alkanes/aromatics may be preferred. Suitable solvents thus include, for example, diethyl ether, THF, dioxane, pentane, hexane, heptane, octane, cyclohexane, toluene, chlorobenzene, and benzene.

The reaction temperature may vary within wide ranges, e.g., between -80° and 50°C, in particular between -20° and 20°C. Too high temperatures may result in undesirable side reactions occurring. On the other hand, at very low temperatures the reaction rate may be undesirably low.

The pressure during the reaction is not critical, as long as the reaction medium is in the liquid phase. As a general range, a value between 0.1 bar and 10 bar may be mentioned.

The reduction reaction is generally quite fast. A suitable reaction time is between 1 minute seconds and 8 hours, depending on the reagents and temperature and pressure applied, e.g., between 30 minutes and 6 hours.

Once the reduction reaction has been completed, it may be preferred to add a neutralizing agent to neutralize any excess of reducing agents. In general, compounds capable of donating a proton will work. Examples of suitable neutralizing agents include methanol, ethanol, isopropanol, ammonium hydroxide, ammonium chloride, ethylacetate, acetic acid, etc.

Upon completion of the reduction reaction, a dispersion of hydride-terminated quantum dots in a solvent will have been formed. This mixture can be used directly as starting material for the hydrosilylation or hydrogermination step. It is also possible to first isolate the quantum dots from the solvent by evaporation of the solvent and other low-boiling components. Intermediate purification steps may be carried out, if so desired.

In the next step of the process according to the invention, the hydride-terminated silicon or germanium quantum dots are subjected to a hydrosilylation or hydrogermination reaction with a passivating agent, to form passivated silicon or germanium quantum dots.

Suitable organic passivating agents comprise an organic hydrocarbon group connected to a reactive group.

In one embodiment the reactive group is a double or triple bond.

In this case, the passivating agent can be a compound of the formula I R1-CX1=CX2-R2, wherein X1 and X2 are independently selected from halogen, hydrogen, alkyl, alkylaryl, aryl or arylalkyl, the alkyl, alkylaryl, aryl or arylalkyl having 1-20 carbon atoms, in particular 1, 2, or 3 carbon atoms, wherein R1 is selected from halogen, hydrogen, alkyl, alkylaryl, aryl or arylalkyl, the alkyl, alkylaryl, aryl or arylalkyl having 1-20 carbon atoms and R2 is selected from halogen, hydrogen, alkyl, alkylaryl, aryl or arylalkyl, the alkyl, alkylaryl, aryl or arylalkyl having 1-20 carbon atoms. It is preferred for R2 to have 2-10 carbon atoms.

Where R1 and R2 are selected from alkyl, alkylaryl, aryl or arylalkyl, these may be substituted with functional groups such as amino groups or hydroxyl groups. They may further contain heteroatoms in the structure, e.g., -O- in an ether moiety, or -S- in a thioether moiety, or amide moieties, or ester moieties, or thioester moieties. R1 and R2 can contain further unsaturations such as further double or triple bonds. It is preferred for X1 and X2 in formula I to be hydrogen or halogen, as the presence of organic groups on the carbon atom with the double bond may interfere with the hydrosilylation reaction.

The passivating agent can also be a compound of formula II R1-C≡C-R2, where R1 and R2 have the same meaning as in formula I. It is preferred for the compound of formula I and the compound of formula II to be unsaturated at the terminal position. In other words, it is preferred for these compounds to be 1-alkenes or 1-alkynes. It is therefore preferred if in the compound of formula I R1 is halogen or hydrogen and X1 is halogen or hydrogen. In the compound of formula II it is preferred if R1 is halogen or hydrogen.

Examples of suitable compounds include 1-butene, 1-pentene, 1-hexene, 1-heptene, 1-octene, 1-nonene, 1-decene, and higher analogs such hexadecane. Hexadecene may be preferred. Further examples of suitable compounds include 1-butyn, 1-pentyn, 1-hexyn, 1-heptyn, 1-octyn, 1-nonyn, and 1-decyn. Still further examples of suitable compounds are difunctional compounds such as 1,7-octadiene and 1,7 octadiyne, hydroxyl-containing compounds such as 5-hexen-1-ol, ester-containing compounds such as ethyl 4-pentenoate, and amide-containing compounds such as methyl 4-pentenamide.

Where halogen is present, it can be selected from F, Cl, Br, and I. The use of fluorine is considered preferred.

It may be attractive to use halogen-containing passivating agents as these have been found to create QDs with good optoelectronic properties. Accordingly, in one embodiment, in formula I and II above, one or more of R1 and if present X1 and X2 are halogen, in particular fluorine. In one embodiment, R1, and if present X1 and X2 are all halogen, in particular fluorine. The use of per-halogen compounds, in particular perfluoro compounds may be particularly attractive, because they have been found to give quantum dots with high hydrophobicity. Accordingly, in one embodiment the compounds of formula I and II are per-halogen compounds.

Examples of suitable compounds are perfluoro-1-butene, perfluoro-1-pentene, perfluoro-1-hexene, perfluoro-1-heptene, perfluoro-1-octene, perfluoro-1-nonene, perfluoro-1-decene and higher analogs. Further examples of suitable compounds include perfluoro-1-butyn, perfluoro-1-pentyn, perfluoro-1-hexyn, perfluoro-1-heptyn, perfluoro-1-octyn, perfluoro-1-nonyn, perfluoro-1-decyn and higher analogs.

The hydrosilylation or hydrogermination reaction is generally carried out by contacting the hydrogen-terminated quantum dots with the passivation agent. An effective way to achieve this is to combine both compounds in a solvent.

Suitable solvents will be relatively unreactive under reaction conditions in that they do not react with the quantum dots or the passivation agent to a substantial extent. Examples of suitable solvents include aromatics solvents such as toluene, benzene or chlorobenzene, ethers such as THF and dioxane, and alkanes such as pentane, hexane, heptane, octane, and cyclohexane. Compounds such as DMF and NMP may also be used. Alcohols such as methanol and ethanol may be used, but in that case it is preferred to keep the reaction time relatively short because of the possibility of side reactions occurring.

Depending on its nature, the passivating agent may also be used as a solvent. This has the advantage that only a single compound has to be added during the passivation step.

The amount of passivating agent is not critical in the method according to the invention, as long as sufficient passivating agent is added to passivate the hydride-terminated quantum dots quantum dots. It is within the scope of the skilled person to select a suitable amount of reducing agent. In one embodiment, the passivating agent is used in an amount of 1 to 100 mole passivating agent per mole hydride groups to be converted, in particular in an amount of at least 2 mole passivating agent per mole hydride groups to be converted, or at least 3 mole passivating agent per mole hydride groups to be converted. In one embodiment, the passivating agent is used in an amount of at most 50 mole passivating agent per mole hydride groups to be converted, more in particular at most 20 mole passivating agent per mole hydride groups to be converted.

The solvent generally makes up between 10 and 99 wt.% of the reaction mixture comprising hydrogen-terminated quantum dots, passivation agent and solvent. If the amount of solvent is below 10 wt.%, it is generally insufficient to allow proper mixing of the various reactants. The addition of excessively large amounts of solvent is to be avoided because it will add additional reactor volume and may add contaminants to the system. This also applies to the other reaction steps where a solvent is used.

The reaction may be carried out in the presence of a catalyst. Suitable catalysts include metal-containing catalysts such as catalysts comprising one or more of Fe, Ru, Rh, Ir, Pd and Pt. Platinum-containing catalysts may be preferred. Borane catalysts such as BH3 may also be used, as may catalysts based on radical reactions. Catalysts may be supported on a carrier, e.g., an alumina of active carbon carrier. The catalyst will be used in catalytic amounts, e.g., in the range of 0.1-10 mol%.

The hydosilylation of hydrogermylation reaction mixture comprising hydrogen-terminated quantum dots and passivation agent is allowed to react. Suitable reaction temperatures include 0 to 200°C, in particular room temperature to 150°C. A temperature below 0°C is generally not attractive for industrial operation. A temperature above 200°C is generally not attractive because it may require relatively high pressures. As some of the passivating agents have low boiling points (ethylene, propene, butene), the use of low temperatures may be preferred.

The reaction pressure is not critical, as long as the various reactants are maintained in the liquid phase. A suitable pressure will thus depend on the reaction temperature. A pressure of 1-10 bar will generally be suitable, while atmospheric pressure may be preferred.

The reaction time will generally vary between 10 minutes and 24 hours, with lower reaction temperatures necessitating longer reaction times. A reaction time of 10 minutes to 6 hours, in particular up to 3 hours may be preferred.

The presence of oxygen and water is to be avoided. Working in an inert atmosphere is within the scope of the person skilled in the art, and encompasses, e.g., the use of nitrogen blankets etc. This requires no further elucidation here.

Upon completion of the reaction, a dispersion of passivated quantum dots in the solvent is obtained.

The dispersion can be processed as desired. For example, insoluble salts may be removed by filtration. Water-soluble salts may be removed by washing with water. Water can then be removed from the solvent, e.g., by drying over magnesium sulphate. Quantum dots can be recovered from the resulting purified dispersion of quantum dots in solvent by evaporation of the solvent. Further purification of the quantum dots can be carried out, e.g., by silica column chromatography. It is within the scope of the skilled person to carry out suitable purification steps.

The invention also pertains to the use of the quantum dots of the present invention in (opto)electronic applications, and to (opto)electronic apparatus comprising them. As the use of quantum dots in these applications and apparatus is known in the art, they require no further elucidation here.

The invention will be elucidated by the following examples, without being limited thereto or thereby

### Example 1 according to the invention

First, Mg2Si (0.5g, 6.5 mmol) was added into n-octane (500 mL). Vacuum degassing under nitrogen filling cycles were performed for at least three times to remove the oxygen in the reaction system. Then Br2 (2.7 mL, 52 mmol) was added in N2 atmosphere under stirring. The suspension was stirred at 130°C for 3 days. After reaction, the suspension was kept under N2, while the solvent was removed by distillation. Fresh N2-spargedn-octane (500 mL) was added to the flask, and the obtained halide terminated Si QD suspension was cooled on ice. LiAlH4 (12 mL, 5 mol/L) in anhydrous THF solution was added via a syringe. The mixture was sonicated for 3 h. After reaction, excess LiAlH4 was quenched with dry and deoxygenated methanol (100 mL) and the reaction mixture was stirred for a further one hour. Degassed and dry 1-hexene (90 mL, 725 mmol) and a catalytic amount of a solution of H2PtCl6 in methanol (0.05 M, 1 mL) were added to the reaction mixture. The reaction mixture was stirred at room temperature overnight. The resulting alkyl-capped Si quantum dots were purified by removal of solvents under reduced pressure, dissolution in hexane or toluene, and subsequent filtration. Finally, approximately 120 mg hexyl-capped Si quantum dots with a quantum yield of 9.6% were obtained. Subsequent purification via silica chromatography resulted in silicon quantum dots with a quantum yield of 30.6% at 350 nm and 24.0 at 370 nm.

### Comparative example 2

The following example is analogous to Example 1 above, except that the halide-terminated quantum dots were provided directly to the passivation step.

Mg2Si (0.5 g, 6.5 mmol) was added into n-octane (500 mL). Vacuum degassing under nitrogen filling cycles were performed three times to remove any oxygen from the reaction system. Then Br2 (2.7 mL, 52 mmol) was added under N2 atmosphere under continuous stirring. The suspension was stirred at 130°C for 3. After reaction, the suspension was kept under N2, while solvents were removed by distillation. To the flask fresh N2-bubbled n-octane (500 mL) was added, and the obtained halide terminated Si QD suspension was cooled on ice. Then n-butyl lithium (11.0 mL, 2.5 M in n-hexane) was added to the above suspension. The reaction mixture was stirred overnight, and MeOH was added dropwise to quench any excess n-butyl lithium. The mixture was stirred for 1 h. The mixture was filtered and the filtrate was subsequently washed with aqueous HCl (1M) (1×) and distilled water (3×), and finally the organic fractions were dried over Na2SO4. Solvent was removed under reduced pressure, yielding ∼112 mg Si quantum dots as a brown solid. The quantum yield of the resulting Si QDs was 1% at 350 nm. Subsequent purification via silica chromatography resulted in silicon quantum dots with a quantum yield of 7% at 350 nm.

## Claims

1. Process for manufacturing silicon or germanium quantum dots which process comprises the steps of
- reacting a Zintl salt or intermetallic compound of post-transition metals or metalloids of silicon or germanium with a halogen-containing oxidizing agent to form halide-terminated silicon or germanium quantum dots,
- subjecting the halide-terminated silicon or germanium quantum dots to a reduction step by reaction with a reducing agent, to form hydride-terminated silicon or germanium quantum dots, and
- subjecting the hydride-terminated silicon or germanium quantum dots to, respectively, a hydrosilylation reaction or hydrogermylation reaction with a passivating agent, to form passivated silicon or germanium quantum dots.

2. Process according to claim 1, wherein the Zintl salt or intermetallic compound of post-transition metals or metalloids of silicon or germanium is selected from the group of Mg2Si, NaSi, KSi, and Ca2Si, Mg2Ge, NaGe, K4Ge, and Ca2Ge, in particular a compound selected from the group of Mg2Si, NaSi, KSi, and Ca2Si

3. Process according to any one of the preceding claims, wherein the halogen-containing oxidizing agent is a bromine-containing oxidizing agent.

4. Process according to any one of the preceding claims, wherein the reducing agent is an inorganic hydride compound.

5. Process according to any one of the preceding claims, wherein the passivating agent is selected from the group of compounds of the formula I R1-CX1=CX2-R2, wherein X1 and X2 are independently selected from halogen, hydrogen, alkyl, alkylaryl, aryl or arylalkyl, the alkyl, alkylaryl, aryl or arylalkyl having 1-20 carbon atoms, in particular 1, 2, or 3 carbon atoms, wherein R1 is selected from halogen, hydrogen, alkyl, alkylaryl, aryl or arylalkyl, the alkyl, alkylaryl, aryl or arylalkyl having 1-20 carbon atoms and R2 is selected from halogen, hydrogen, alkyl, alkylaryl, aryl or arylalkyl, the alkyl, alkylaryl, aryl or arylalkyl having 1-20 carbon atoms, and wherein when R1 and R2 are selected from alkyl, alkylaryl, aryl or arylalkyl, these may be substituted with functional groups such as amino groups or hydroxyl groups, and may further contain heteroatoms in the structure, e.g., -O- in an ether moiety, or -S- in a thioether moiety, or amide moieties, or ester moieties, or thioester moieties, wherein R1 and R2 may contain unsaturations such as further double or triple bonds, and
compounds of formula II R1-C≡C-R2, where R1 and R2 have the same meaning as in formula I.

6. Process according to any one of the preceding claims, comprising the step of subjecting a dispersion of passivated silicon or germanium quantum dots in an organic solvent to one or more steps selected from
- removal of insoluble salts
- removal of water-soluble salts
- removal of solvent.

7. Silicon or germanium quantum dots with a quantum yield of at least 20% at an excitation wavelength of 350 nm, and/or at least 15% at 370 nm.

8. Silicon or germanium quantum dots according to claim 7, which have a quantum yield of at least 25%, in particular at least 30% at an excitation wavelength of 350 nm.

9. Silicon or germanium quantum dots according to claim 7 or 8, which have a quantum yield of at least 20% at an excitation wavelength of 370 nm.

10. Silicon or germanium quantum dots according to any one of claims 7-9, which have a number average particle size of 2.2 +/- 0.5 nm as determined by transmission electron microscopy

11. Silicon or germanium quantum dots according to any one of claims 7-10, which show an emission spectrum with a maximum peak in the range of 390-440 nm, in particular in the range of 400-430 nm, more in particular in the range of 410-430 nm, the peak having a width at half maximum of at most 200 nm, in particular at most 150 nm, e.g., at about 100 nm.

12. Quantum dots according to any one of the preceding claims 7-11 which are silicon quantum dots.

13. Use of silicon or germanium quantum dots according to any one of claims 7-12 or prepared by the process of any one of claims 1-6 in (opto)electronic applications.

14. (Opto)electronic apparatus comprising silicon or germanium quantum dots according to any one of claims 7-12 or prepared by the process of any one of claims 1-6.
